# EUROPEAN PATENT APPLICATION

(11) **EP 0 570 659 A1**
(43) Date of publication of application: **24.11.1993**
(21) Application number: 93100490.7
(22) Date of filing: 14.01.1993
(51) Int. Cl.: C02F 9/00, C02F 1/00

(54) **Drinking water filtration system**

(30) Priority: 11.05.1992 US 881136
(71) Applicant: Yeh, Jye-Jong, Jang Huah City (TW)
(72) Inventor: Yeh, Jye-Jong, Jang Huah City (TW)
(74) Representative: Goddar, Heinz J., Dr.

(57) **Abstract**

A drinking water filtration system comprises mainly a water filtration tube and a water bacteria removing apparatus , which is characterized in that it is composed of a plurality of magnetic bars with a non-magnetic metal piece being sandwiched between two magnetic bars and that the magnetic bars are arranged in a manner that adjoining ends thereof repel each other . In addition , mineral stones in an appropriate quantity are lodged in the space located between magnetic bars and siliceous marl . The mineral stones contain minerals essential to human health , which can be extracted by an electrostatic force of magnetic bars and can be discharged into the purified water . The siliceous marl located at the center of the water filtration tube serves as a means to filter out the water bacteria , such as bacillus and E. coli .

## Description

### BACKGROUND OF THE INVENTION

The present invention relates to a drinking water filtration ststem , and more particularly to a drinking water filtration system designed with structures capable of filtering out and isolating the bacteria in water and of reinforcing the mineral content of the drinking water.

There are a great variety of drinking water filtration system available in the market place today . But most of them are qenerally equipped with the filter made of cottom material , which is vulnerable to damage by a strong water flow and is less effective in filtering out the bacteria in water. Furthermore, they are not equipped to isolate and remove the filtered bacteria in the filtration system . As a result, it is always necessary to replace the old filter with a new one from time to time , resulting in a waste of tme and money.

### SUMMARY OF THE INVENTION

It is , therefore, the primary objective of the present invention to provide a drinking water filtration system with structures consisting of magnetic bars snd siliceous marl . When the water flows into the filtration system, the siliceous marl disposed in the system serves to filter out the bacteria in the water while the magnetic bars arranged in the system serve to remove the filtered bacteria which are deposited on siliceous marl so as to keep the siliceous marl relatively free from bacteria and other unwanted residuea .

It is another objective of the present invention to provide a drinking water filtration system with mineral stones sandwiched between the siliceous marl and the magnetic bars in order to serve th purpose of reinforcing the mineral content of the drinking water . The minerals contained in the mineral stons are forced out by the electrostatic force of the magnetic bars to enrich the mineral content of the drinking water . The mineral content of minerals essential human health such as 62.20% of silicon dioxide , 20.67% of aluminum oxide , 0.38% of titanium oxide , 2.26% of ferric oxide , 5.11% of calcium oxide , 3.45% of magnesium oxide , 3.27% of sodium oxide, and 0.98% of potassium oxide .

It is still another objective of the present invention to provide a drinking water filtration system with a water outlet located under the bottom portion on which magnetic bars are lodged . The water outlet is used to collect the purified water to form a great flow of drinking water.

### BRIEF DESCRIPTION OF THE DRAWINGS

- FIG. 1: shows an external three-dimensional view of the preferred embodiment of the present invention.
- FIG. 2: shows an exploded view of the preferred embodiment of the present invention .
- FIG. 3: shows a cut-awayn view of the preferred embodiment of the present invention .

### DETAILED DESCRIPTION OF THE PREFERRED EMBODIMENT

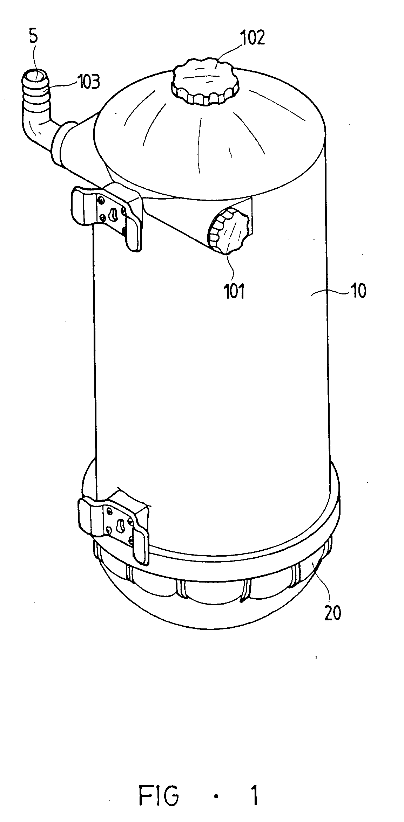

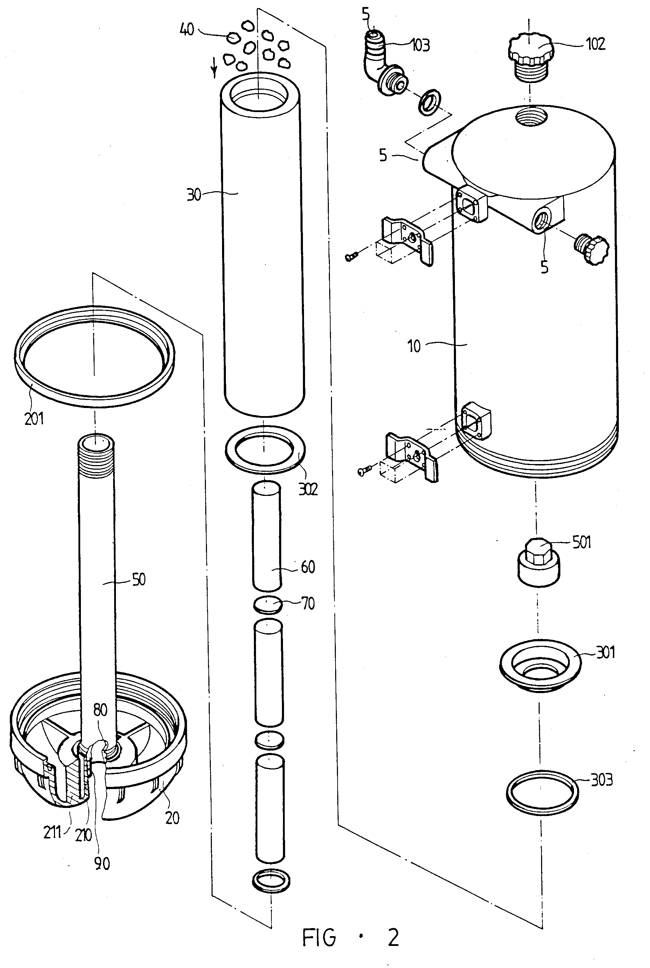

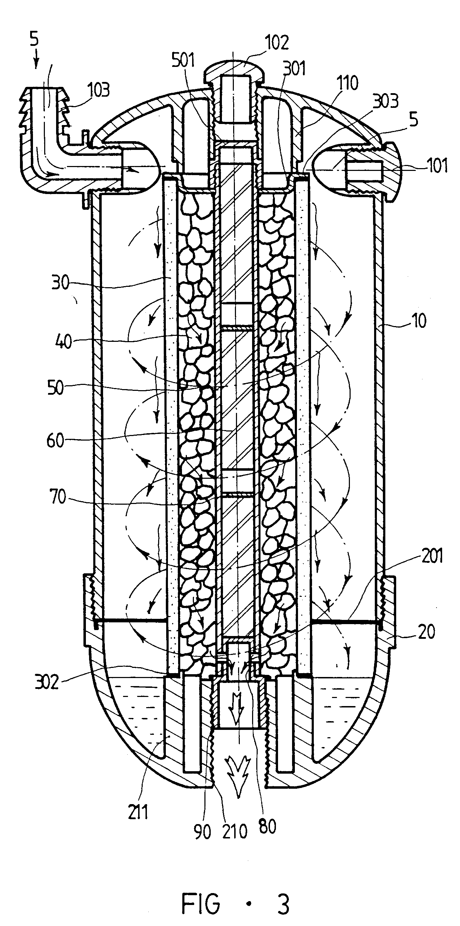

Referring to FIGS. 1-3 , the drinking water filtration system embodied in the present invention is shown comprising a filtration tube 10 of a cylindrical shape and an upper end portion which is constructed as a ball-shaped surface having a water stopper 102 disposed at the center thereof to prevent the water from leaking out . The interior of the ball-shaped surface comprises a screw thread for water stopper 102 . Located at the outer periphery of the ball-shaped surfaceis a flange 110, which is used to sustain the cover plate 301 in order to stabilize the siliceous marl 30 . Two water inlets 5 are construsted on the periphery of the ball-shaped surface . One of the water inlets 5 is coupled with the water-supplying joint 103 while the other water inlet is arranged on the water stopper 101 . The portion under the filtration tube 10 is hollow . Located on the surface of the filtration tube 10 is a screw thread of an appropriate length for use in coupling with the residues collector 20 . A washer 201 is placed between the filtration tube 10 and the residues collector 20 to avert the leakage of water .

The residues collector 20 comprises a hollow threaded column 201 disposed therein, which in turn has a flange 211 disposed on the outer periphery thereof . Located at the upper portion of the threaded column 210 is a threaded plug head 90, to which the bottom portion of the magnetic bar receiving tube 50 is arranged . A water outlet 80 is constructed thereafter . The magnetic barsreceiving tube 50 contains therein a plurality of permanent magnetic bars 60, which are arranged in such a manner that the adjoining ends of magnetic bars 60 repel each other. Sandwiched between two magnetic bars 60 is a non-magnetic metal piece 70 which is used to separate the magnetic field of each of permanent magnetic bars 60 . The repelling magnetic field is capable of removing the residues deposited on the siliceous marl 30 located on the flange 211 . As a result, the siliceous marl 30 is kept clean and free from residues all the time . In addition, mineral stones 40 of an appropriate amount are lodged in the space batween siliceous marl 30 and the magnetic bars receiving tube 50 . When the water being filtered out of the siliceous marl 30 enters the space where the mineral stones 40 are located , the electrostatic force generated by mangetic bars 60 is capable of extracting the miinerals contained in the mineral stones 40 and of discharging the extracted minerals into the purified water flowing into the water outlet 80 . Located above the siliceous marl 30 is a cover plate 301 which is fastened to the upper portions of siliceous marl 30 and magnetic bars receiving tube 50 by means of a bolt 501 whose upper end is inserted into the concentric threaded hole of the water stopper 102 in order to retain the central filtration system .

The embodiment of the present invention described above is to be considered in all respects as merely an illustration of principles of the present invention . Accordingly, the present invention is to be limited only by the scope of the hereinafter appended claims .

The features disclosed in the foregoing description, in the claims and/or in the accompanying drawings may, both, separately and in any combination thereof, be material for realising the invention in diverse forms thereof.

## Claims

1. A drinking water filtration system comprising a water filtration tube and a water bacteria removing apparatus which is characterized in that it comprises :
(a) a plurality of magnetic bars with a non-magnetic piece being sandwiched between two said magnetic bars , said magnetic bars being arranged in a manner that adjoining ends thereof repel each other ;
(b) mineral stones lodged in the space located between magnetic bars and siliceous marl , said mineral stones containing minerals essential to human health , which can be extracted by an electrostatic force of said magnetic bars ; and
(c) siliceous marl located at the center of said water filtration tube as a means to filter out bacteria and other unwanted particles .

2. A drinking water filtration system in accordance with claim 1 , wherein the bottom portion of said magnetic bars comprises thereunder an outlet permitting an outflow of purified water .
